# EUROPEAN PATENT SPECIFICATION

(11) **EP 4 477 543 B1**
(45) Date of publication and mention of the grant of the patent: **21.01.2026**
(21) Application number: 23305952.6
(22) Date of filing: 15.06.2023
(51) Int. Cl.: B64D 11/00, B64D 11/06

(54) **A FUNCTIONAL MODULE INTENDED TO BE INTEGRATED IN A SEAT OF A PUBLIC TRANSPORT VEHICLE**
FUNKTIONSMODUL ZUR INTEGRATION IN EINEN SITZ EINES ÖFFENTLICHEN TRANSPORTFAHRZEUGS
MODULE FONCTIONNEL DESTINÉ À ÊTRE INTÉGRÉ DANS UN SIÈGE DE VÉHICULE DE TRANSPORT PUBLIC

(43) Date of publication of application: 18.12.2024
(73) Proprietor: ALSTOM Holdings, 93400 Saint-Ouen-sur-Seine (FR)
(72) Inventor: DUQUESNE, Julie, 69003 LYON (FR); DEHAYE, Clément, 69001 LYON (FR); LARGEAUD, Véronique, 93400 SAINT-OUEN-SUR-SEINE (FR)
(74) Representative: Plasseraud IP

(56) References cited:
- FR-A1- 3 078 030
- JP-A- 2018 062 299
- US-A1- 2019 176 989

## Description

The present invention relates to a functional module intended to be integrated in a seat for a public transport vehicle, in particular a railway vehicle, or an aircraft.

A functional module is a module comprising a casing and at least one electronic device arranged in the casing and intended to implement at least one function, for instance a reading light.

Known functional modules usually do not allow the integration of several electronic devices, or only in different parts and with poor level of integration.

Due to high integration constraints inside a train cabin and the fact that railway operators take more and more care of the passenger comfort, there is a lot of integration constraints (size, cabling, aesthetics). With traditional devices, it is not possible to have both integration and all the functions in a same module.

FR 3 078 030 A1 discloses a device for sliding a headrest on the backrest of a car seat. The device includes electrically conductive metal lamellae that are vertically spaced from each other, where the lower end of each lamella is bent such that its free edge is in contact with a blade of a cylindrical sleeve.

JP 2018 062299 A discloses an illuminating device attached to the compartment ceiling portion of a vehicle. The device includes an attachment surface provided with a contoured surface, where the angle relative to the plane changes due to a change in the shape of the casing, and it is attached to an LED.

The invention is intended to solve this problem, by proposing a functional module able to integrate several electronic devices.

To this end, the invention relates to an assembly according to claim 1. Mechatronics Integrated Device (MID) technology enables the integration of multiphysical (e.g. mechanical, electrical, thermal, fluidic and optical) functions on or even in three-dimensional circuit carriers. The variety of available MID technologies includes laser direct structuring (LDS) and plasma metallization as well as all processes of printed electronics, additive manufacturing or microsystem technology and opens up new potentials through 3D capability. This allows crossindustry applications such as sensors and actuators, antennas and RF (Radio Frequency) transmission elements, energy converters and storage devices, optical information elements and lighting effects, as well as electronic functions to be developed in the smallest of spaces and on almost any material.

Thus, the use of a Mechatronics Integrated Device (MID) allows the easy integration of several electronic devices, while having a casing whose shape follows the desired curvatures for an aesthetic integration to the seat. The technology for Mechatronics Integrated Device uses 3D shape that allow having a part that can be integrated to the seat very well, with more functions than a known module, without adding cabling, in only one module.

Thus, the module of the invention can integrate several functions as a reading light and other functions for the passenger and the vehicle operators.

Some functions can easily be added or removed based on the needs of the manufacturer.

It should be noticed that the invention encompasses any type of Mechatronics Integrated Device, such as Laser Direct Structuring, Printing of a conductive ink, Plasma Coat, Two step molding, In Mold Electronic, etc.

A functional module of the invention may comprise any of the following features, taken alone or in any technically possible combination:
- The functional module includes at least one of the following electronic devices, at least partially integrated in the Mechatronics Integrated Device: a reading light comprising a light emitter, and a switch to activate or deactivate the light emitter; a presence sensor; a USB plug; a seat reservation display; a microphone and/or a speaker; or A NFC Antenna.
- The functional module includes all of the following electronic devices: a reading light comprising a light emitter, and a switch to activate or deactivate the light emitter; a presence sensor; a USB plug; a seat reservation display, a microphone and/or a speaker, and A NFC Antenna, each of these electronic devices being at least partially integrated in the Mechatronics Integrated Device.
- The casing comprises an external visible cover, and an internal interface cover, the internal interface cover comprising fastening means for fastening on the seat.

Several aspects and advantages of the invention will be shown in the following disclosure, given only as a non-limitative example and made in reference to attached figures, in which:
- Figure 1 is a perspective view of seats comprising a functional module according to one embodiment of the invention;
- Figure 2 is a perspective view of the functional module equipping one of the seats of Figure 1;
- Figure 3 is a sectional view of the module of Figure 2;
- Figure 4 is a perspective view of an example of module.

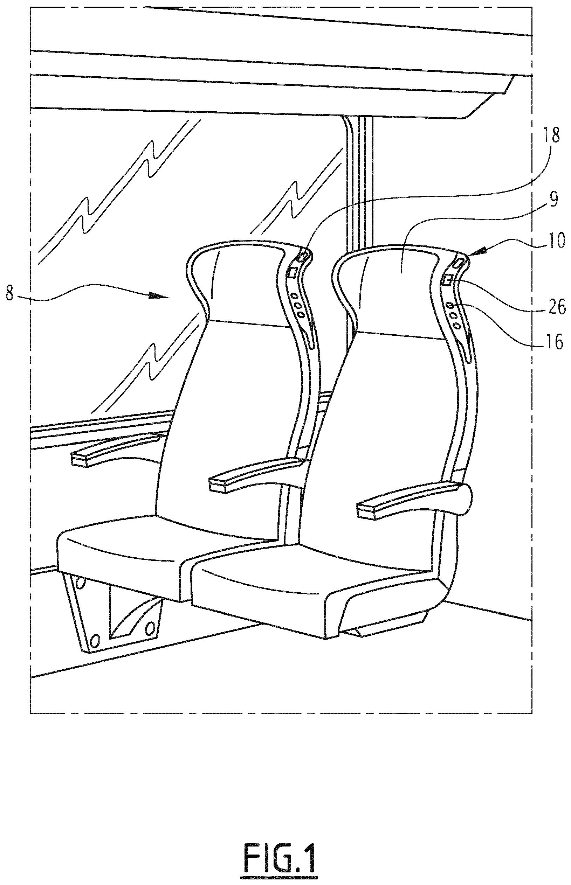

Figure 1 shows seats 8, each comprising a respective functional module 10 according to one embodiment of the invention. The seats 8 and the functional modules 10 are identical, so only one will be disclosed hereafter.

In the example shown, the seats 8 are seats for a railway vehicle. Alternatively, the seats could be seats for an aircraft, or for any public transport vehicle.

The functional module 10 is for example arranged on a headrest 9 of the seat 8, on a lateral side of this headrest 9. It should be noticed that, as a variant, the functional module 10 could be arranged in any other part of the seat 8, such as a backrest, an armrest, a wallside, a luggage rack, etc.

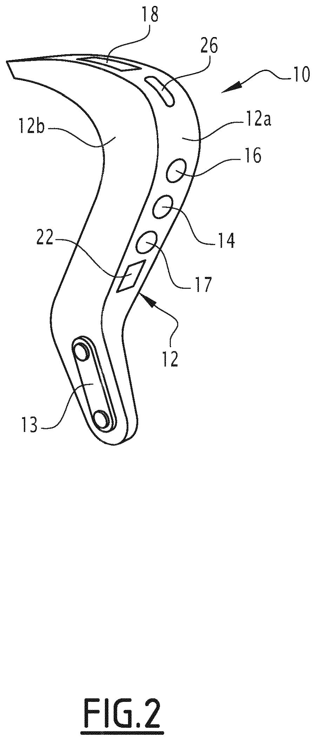

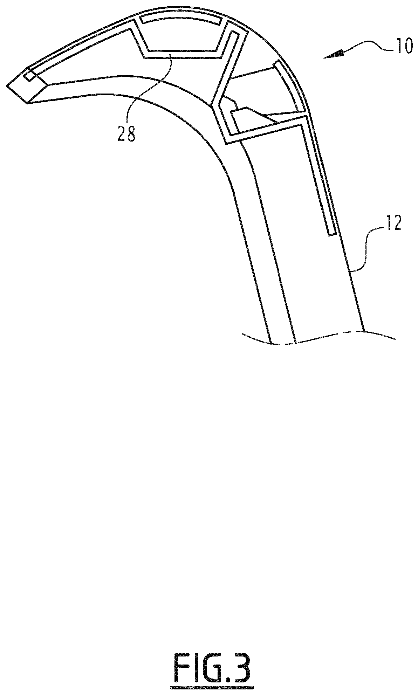

The functional module 10, shown on figures 2 and 3, comprises a casing 12 shaped to form a visible part of the seat 8. The casing 12 comprises an external visible cover 12a, and an internal interface cover 12b. The external visible cover 12a has an aesthetical function, and the internal interface cover 12b is intended to be fastened to the seat 8, for instance by means of fastening means 13.

The external visible cover 12a preferentially comprises access holes to access to manipulation means 14 or 17, for optional switches (for example push buttons), and to some visual means, such as a reading light 16 and/or a seat reservation display 18 and/or light indicator 26, or a mark to indicate a tactile zone for tactile buttons 14 and 17.

The functional module 10 integrates at least one electronic device to perform functions.

For instance, the electronic devices comprise at least one of the following devices:
- a reading light 16 to illuminate the passenger area when reading,
- an indicator light 26 to indicate the reservation status of the seat thanks to a color code (green/orange/red),
- a switch, for example a push button 14 or 17, to activate or deactivate the reading light 16, or to call the crew, or any other appropriate function;
- a presence sensor 22 intended to indicate to an operator if the seat is occupied or not;
- a USB plug 24 , for the charge of a personal device such a smartphone or a tablet;
- a seat reservation display 18,
- a microphone and/or a speaker
- a NFC Antenna; and
any other possible device.

In order to integrate all of these functions in the same module, the functional module 10 comprises a Mechatronics Integrated Device 28, arranged in the casing 12, including at least partially the electronic devices.

We remind that a Mechatronics Integrated Device (MID) is for example an injection molded thermoplastic part with integrated electronic circuit traces.

In a preferred embodiment, such a Mechatronics Integrated Device is manufactured by the following process.

First, the substrate can be of any desired shape, so it can be easily adapted to the interior of the casing 12.

The substrate is a plastic substrate on which electronic traces are integrated by various means (screen printing, printing, laser etc.). Besides, this plastic substrate can be formed before or after the integration of the electronic traces by all the known processes of plastics processing (injection, overmolding, thermoforming, etc.).

In the example shown, grooves are then cut into the substrate, for example by laser means.

Then, the substrate provided with grooves is immersed in a copper bath. The copper is then deposited in the grooves, forming conductive tracks.

Preferentially, the substrate is then immersed in a nickel bath, for nickel being deposited in the grooves onto the copper.

As a variant, the Mechatronics Integrated Device could be manufactured with a process of "In Mold Electronic", i.e., a process integrating printed decorations and electronic circuitry with thermoforming and molding.

Any other process for manufacturing a Mechatronics Integrated Device could be considered.

This technology allows using the volume of the substrate to integrate components and tracks, and enable connecting different sub-system directly to the casing, so it uses less wires than in prior art. Besides, forming a substrate with a tridimensional shape allows a good positioning of the electronic components such as lights and sensors.

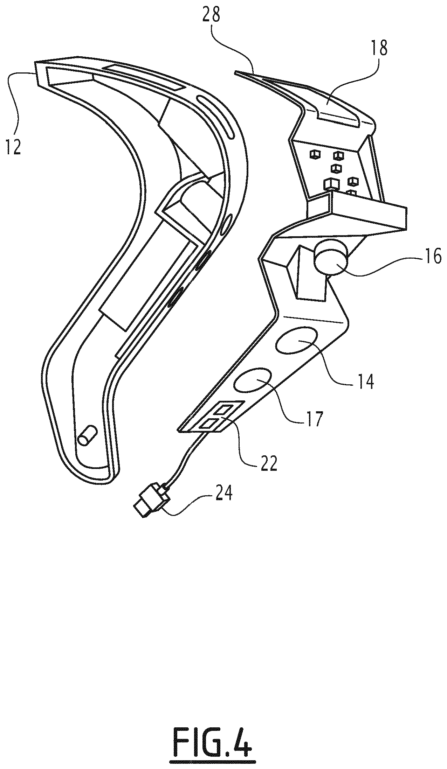

An example of tridimensional shape of Mechatronics Integrated Device 28 is shown on figures 3 and 4. This tridimensional shape may comprise recesses to receive electronic components.

As it is shown on Figure 3, the casing 12 may also comprise additional electronic components, connected to the tracks of the Mechatronics Integrated Device 28.

The invention allows integrating all functionalities in a same module, with a moderate cost. In particular, some functionalities, like the presence sensor, the microphone, the speaker, or the NFC tag, are added in the same module as the reading light. A product including all these features in one module was not available in prior art.

It should be noticed that the Mechatronics Integrated Device 28 could be standardized while the casing 12 is adapted as a function of the seat. Thus, seats from different vehicles could be equipped with functional modules of different casings while the Mechatronics Integrated Device 28 are the same.

For example, the casing may be a modular casing having a basic shape that could be reported on any seat. The casing shape may be a rectangular shape or similar.

As a variant, the casing may be integrated in the headrest, and holding a headrest cushion.

As another variant, the casing may be integrated in the backrest. In this case, the functional module is designed for the user behind the seat.

## Claims

1. An assembly of several functional modules (10) intended to equip different seats (8) of a public transport vehicle, wherein:
- each functional module (10) comprises a casing (12) shaped to form a visible part, and integrating at least one electronic device, and comprises a Mechatronics Integrated Device (28), integrated in the casing (12), including at least partially the electronic device, and **characterised in that**:
- the casings (12) of at least two of the functional modules (10) are different, and
- the Mechatronics Integrated Devices (28) of all the functional modules are all the same.

2. The assembly of claim 1, including at least one of the following electronic devices, at least partially integrated in the Mechatronics Integrated Device (28):
- a reading light comprising a light emitter (16)
- a switch (17) to activate or deactivate the reading light or to call the crew;
- an indicator light (26)
- a presence sensor (22);
- a USB plug (24);
- a seat reservation display (18),
- a microphone and/or a speaker, or
- a NFC Antenna.

3. The assembly of claim 1, comprising all of the following electronic devices:
- a reading light comprising a light emitter (16)
- a switch (17) to activate or deactivate the reading light or to call the crew;
- an indicator light (26)
- a presence sensor (22);
- a USB plug (24);
- a seat reservation display (18),
- a microphone and/or a speaker, and
- a NFC Antenna,
each of these electronic devices being at least partially integrated in the Mechatronics Integrated Device (28).

4. The assembly of any of preceding claims, wherein each casing (12) comprises an external visible cover (12a), and an internal interface cover (12b), the internal interface cover (12b) comprising fastening means (13) for fastening on the seat (8).

## Patentansprüche

1. Anordnung aus mehreren Funktionsmodulen (10), welche dazu vorgesehen sind, verschiedene Sitze (8) eines öffentlichen Transportfahrzeugs auszustatten, wobei:
- jedes Funktionsmodul (10) ein Gehäuse (12) umfasst, welches geformt ist, um einen sichtbaren Teil zu bilden, und welches wenigstens eine elektronische Vorrichtung integriert, und welches eine Mechatronik-integrierte Vorrichtung (28) umfasst, welche in dem Gehäuse (12) integriert ist und welche die elektronische Vorrichtung wenigstens teilweise umfasst, und **dadurch gekennzeichnet, dass**:
- die Gehäuse (12) wenigstens zweier Funktionsmodule (10) verschieden sind, und
- die Mechatronik-integrierten Vorrichtungen (28) aller Funktionsmodule alle die gleichen sind.

2. Anordnung nach Anspruch 1, umfassend wenigstens eine der folgenden elektronischen Vorrichtungen, welche wenigstens teilweise in die Mechatronik-integrierte Vorrichtung (28) integriert ist:
- ein Leselicht, welches einen Lichtemitter (16) umfasst
- einen Schalter (17) zum Aktivieren oder Deaktivieren des Leselichts oder zum Rufen des Personals;
- ein Indikatorlicht (26)
- einen Anwesenheitssensor (22);
- einen USB-Stecker (24);
- eine Sitzreservierungsanzeige (18),
- ein Mikrophon und/oder einen Lautsprecher, oder
- eine NFC-Antenne.

3. Anordnung nach Anspruch 1, umfassend alle der folgenden elektronischen Vorrichtungen:
- ein Leselicht, welches einen Lichtemitter (16) umfasst
- einen Schalter (17) zum Aktivieren oder Deaktivieren des Leselichts oder zum Rufen des Personals;
- ein Indikatorlicht (26)
- einen Anwesenheitssensor (22);
- einen USB-Stecker (24);
- eine Sitzreservierungsanzeige (18),
- ein Mikrophon und/oder einen Lautsprecher, und
- eine NFC-Antenne,
wobei jede dieser elektronischen Vorrichtungen wenigstens teilweise in der Mechatronik-integrierten Vorrichtung (28) integriert ist.

4. Anordnung nach einem der vorhergehenden Ansprüche, wobei jedes Gehäuse (12) eine extern sichtbare Abdeckung (12a) und eine interne Grenzflächenabdeckung (12b) umfasst, wobei die interne Grenzflächenabdeckung (12b) Befestigungsmittel (13) zum Befestigen an dem Sitz (8) umfasst.

## Revendications

1. Ensemble de plusieurs modules fonctionnels (10) destinés à équiper différents sièges (8) d'un véhicule de transport public, dans lequel :
- chaque module fonctionnel (10) comprend un boîtier (12) formé pour constituer une partie visible, et intégrant au moins un dispositif électronique, et comprend un dispositif mécatronique intégré (28), intégré dans le boîtier (12), comportant au moins partiellement le dispositif électronique, et **caractérisé en ce que** :
- les boîtiers (12) d'au moins deux des modules fonctionnels (10) sont différents, et
- les dispositifs mécatroniques intégrés (28) de tous les modules fonctionnels sont tous les mêmes.

2. Ensemble selon la revendication 1, comportant au moins un parmi les dispositifs électroniques suivants, au moins partiellement intégrés dans le dispositif mécatronique intégré (28) :
- une lampe de lecture comprenant un émetteur de lumière (16)
- un interrupteur (17) pour activer ou désactiver la lampe de lecture ou pour appeler l'équipage ;
- un voyant lumineux (26)
- un capteur de présence (22) ;
- une prise USB (24) ;
- un affichage de réservation de siège (18),
- un microphone et/ou un haut-parleur, ou
- une antenne NFC.

3. Ensemble selon la revendication 1, comprenant l'ensemble des dispositifs électroniques suivants :
- une lampe de lecture comprenant un émetteur de lumière (16)
- un interrupteur (17) pour activer ou désactiver la lampe de lecture ou pour appeler l'équipage ;
- un voyant lumineux (26)
- un capteur de présence (22) ;
- une prise USB (24) ;
- un affichage de réservation de siège (18),
- un microphone et/ou un haut-parleur, et
- une antenne NFC,
chacun de ces dispositifs électroniques étant au moins partiellement intégré dans le dispositif mécatronique intégré (28).

4. Ensemble selon l'une quelconque des revendications précédentes, dans lequel chaque boîtier (12) comprend un couvercle visible externe (12a), et un couvercle d'interface interne (12b), le couvercle d'interface interne (12b) comprenant des moyens de fixation (13) pour la fixation sur le siège (8).
